# EUROPÄISCHE PATENTSCHRIFT

(11) **EP 2 742 092 B1**
(45) Veröffentlichungstag und Bekanntmachung des Hinweises auf die Patenterteilung: **20.12.2017**
(21) Anmeldenummer: 12743192.2
(22) Anmeldetag: 07.08.2012
(51) Int. Cl.: C08K 7/28, B32B 27/20, B32B 27/36, C08K 9/06, C08L 69/00

(54) **GEFÜLLTE POLYMERZUSAMMENSETZUNG UND COEXTRUDIERTE PLATTE ERHÄLTLICH HIERAUS**
FILLED POLYMER COMPOUND AND COEXTRUDED BOARD CREATED USING SAME
COMPOSITION POLYMÈRE REMPLIE ET PLAQUE COEXTRUDÉE ÉTANT OBTENUE À PARTIR DE CELLE-CI

(30) Priorität: 08.08.2011 EP 11176857
(43) Veröffentlichungstag der Anmeldung: 18.06.2014
(73) Patentinhaber: Covestro Deutschland AG, 51373 Leverkusen (DE)
(72) Erfinder: BLASCHKE, Ulrich, 47829 Krefeld (DE); HÄHNSEN, Heinrich, 47228 Duisburg (DE); SCHWARZ, Peter, 47800 Krefeld (DE); KRANER, Klaus, 42651 Solingen (DE); THIEM, Hans-Jürgen, 41539 Dormagen (DE); WAGNER, Michael, 47443 Moers (DE)
(74) Vertreter: Levpat
(86) Internationale Anmeldenummer: PCT/EP2012/065459
(87) Internationale Veröffentlichungsnummer: WO 2013/020982

(56) Entgegenhaltungen:
- DE-A1- 2 721 886
- DE-A1-102006 055 478
- JP-A- 6 345 953

## Beschreibung

Die vorliegende Erfindung betrifft eine Polymerzusammensetzung und coextrudierte Platten, in denen die Coextrusionsschicht diese Polymerzusammensetzung enthält sowie daraus hergestellte Formkörper, insbesondere Behälter und Gepäckstücke, ganz besonders Koffer. Die Formkörper können beispielsweise durch Thermoformen hergestellt werden. Platten, die mit der erfindungsgemäßen Polymerzusammensetzung erhältlich sind, weisen eine hohe mechanische Stabilität, eine hohe Kratzfestigkeit, eine ansprechende Haptik sowie einen ausgezeichneten homogenen äußeren optischen Eindruck auf. Weiterhin betrifft die vorliegende Erfindung ein Verfahren zur Herstellung dieser Polymerzusammensetzungen sowie ein Verfahren zur Herstellung der erfindungsgemäßen Platten.

Im Stand der Technik sind bereits einige Ansätze für die Bereitstellung von Materialien von hoher mechanischer Stabilität kombiniert und entsprechende Oberflächeneigenschaften beschrieben worden. Hierbei wurde unter anderem auf Kunststoffzusammensetzungen, die mit Verstärkungsstoffen ausgerüstet sind, zurückgegriffen.

So beschreibt die US 20080132617 A1 ein Polycarbonat Blend enthaltend Glashohlkugeln, welches verbesserte Fließeigenschaften, eine hohe Steifigkeit, ein niedriges Schrumpfungsverhalten sowie eine hohe Kratzfestigkeit besitzt.

WO2007025663 A1 beschreibt eine Polymerzusammensetzung enthaltend ein spezielles Polyolefin zusammen mit Polycarbonat oder anderen Thermoplasten, und einem Füllstoff aus Glas. Durch diese spezielle Mischung wird ein soft-touch Material mit hoher Kratzfestigkeit erhalten.

Die JP 72-58528 A offenbart Polycarbonat mit oberflächenbehandelten Glashohlkugeln als Füllstoff. Die Polycarbonate weisen gute mechanische Eigenschaften auf.

In der US 5,334,427 A wird eine mindestens dreischichtige Platte aus einem Thermoplasten offenbart. Dabei ist eine Glasfasermatte über eine chemische Binderschicht mit einer Basisschicht, enthaltend mindestens zwei verschiedene Füllstoffe, verbunden. Die Platte ist prägbar und ist mechanisch besonders stabil.

Bereits in GB 1585327 und GB 1585338 wird die Herstellung von Platten mit Glaskugeln beschrieben.

US 4,849,265 A beschreibt flexible Filme aus PC, bei dem auf der Oberfläche silanisierte Glaskugeln in eine Schicht eines speziellen Materials eingebettet sind, wobei es sich bei dem Material nicht um ein Polycarbonat handelt.

WO 1996007525 A1 beschreibt das Hinterspritzen eines Glas-Kugel-haltigen dünnen Formteils aus Polycarbonat zur Erzeugung einer kratzfesten Oberfläche.

In der US 6204971 B1 wird einen Projektionsschirm beschrieben, bei dem Glashohlkugeln in eine opake Schicht eingedrückt werden, wobei die Schicht wiederum auf eine transparente Polycarbonat-Platte aufgebracht ist, um auf diese Weise eine möglichst hohe Diffusion des Lichtes zu erreichen.

WO 2002062877A1 beschreibt die Verbesserung der Kratzfestigkeit sowie weiterer Eigenschaften wie Mechanik und Flammschutzeigenschaften von PET und anderen Kunststoffen wie Polycarbonat durch Glasmaterialien in Partikel- oder Faserform. Darüber hinaus wird die Herstellung von extrudierten Platten beschrieben, bei denen glashaltiges Material als ein- oder beidseitige Coextrusionsschicht auf die Platten aufgebracht werden.

Bei allen bisherigen Bemühungen besteht jedoch nach wie vor ein Bedarf an coextrudierten Platten mit einer hoher mechanischen Stabilität, einer hohen Kratzfestigkeit, und einer ansprechenden Haptik, die insbesondere bezüglich ihres optischen Eindrucks im Hinblick auf ein homogenes Erscheinungsbild weiter deutlich verbessert sind.

Somit war es die Aufgabe der vorliegenden Erfindung, eine Polymerzusammensetzung sowie coextrudierte Platten, die in einer Schicht, bevorzugt einer durch Coextrusion aufgebrachten Schicht, die Polymerzusammensetzung enthält, bereitzustellen, die eine hohe mechanische Stabilität, eine hohe Kratzfestigkeit, eine ansprechende Haptik und einen ausgezeichneten homogenen äußeren optischen Eindruck aufweisen.

Die gestellte Aufgabe konnte überraschender Weise mit Hilfe einer Polymerzusammensetzung, die Polycarbonat und bestimmte Glashohlkugeln enthält, gelöst werden. Erfindungsgemäße coextrudierte Platten enthalten eine Basisschicht sowie eine auf mindestens einer Seite der Basisschicht, bevorzugt auf einer Seite der Basisschicht, aufgebrachte Coextrusionsschicht enthaltend die erfindungsgemäße Polymerzusammensetzung, weisen die geforderten Eigenschaften auf. Die Schmelzvolumenraten (MVR) der Polycarbonate der Basisschicht und der Coextrusionsschicht sind bevorzugt unterschiedlich.

Gegenstand der vorliegenden Erfindung ist daher: eine Polymerzusammensetzung P) enthaltend ein Polycarbonat mit einem gewichtsmittleren Molekulargewicht Mw von 24.000 bis 33.000 g/mol, bestimmt mittels Gelpermeationschromatographie unter Verwendung von Polycarbonatstandard, und einer Schmelzvolumenrate, gemessen nach DIN EN ISO 1133 bei 1,2 kg Belastung und 300°C, von 8 bis 16 cm³/(10 min) sowie 5,0 Gew.-% bis 20,0 Gew.-% (bezogen auf die Gesamtmenge der Zusammensetzung) Glashohlkugeln mit einer Alkalinität, gemessen nach ASTM D3100, von kleiner 1,0 meq/g sowie übliche Additive, wobei die Polymerzusammensetzung keine weiteren thermoplastischen Polymere enthält.

Weiterhin ist Gegenstand der vorliegenden Erfindung eine Platte, enthaltend zwei Schichten A) und B), wobei Schicht A) eine Polymerzusammensetzung - wie oben und in Anspruch beschrieben ist - und Schicht B) Polycarbonat mit einer Schmelzvolumenrate (MVR) von 3 bis 9 cm3/10 min, bevorzugt 4 bis 9 cm3/10 min enthält, wobei das Polycarbonat in Schicht A) eine Schmelzvolumenrate (MVR) von 8 bis 16 cm3/10 min aufweist. Bevorzugt sind die Schmelzvolumenrate der Polycarbonate der Basisschicht und der Extrusionssschicht verschieden.

Weiterhin ist Gegenstand der Erfindung ein Verfahren zur Herstellung der Polymerzusammensetzung P) gemäß Anspruch 1, wobei das Polycarbonat auf einem Zweiwellenextruder mit den Glashohlkugeln gemischt wird, dadurch gekennzeichnet, dass die Glashohlkugeln über einen Seiteneinlauf direkt in die Schmelze, die eine Massetemperatur von 320°C bis 360°C aufweist, und die Extruderdrehzahl 300 U/min bis 500 U/min beträgt und das Polycarbonat eine Schmelzvolumenrate (MVR) von 8 bis 16 cm3/10 min aufweist
Die Polymerzusammensetzung P) enthält bevorzugt 8,0 Gew.-% bis 15,0 Gew.-%, besonders bevorzugt 9,0 Gew.-% bis 12,0 Gew.-% Glashohlkugeln.

Erfindungsgemäße Glashohlkugeln bestehen bevorzugt aus alkliarmen Gläsern, bevorzugt Borosilikatglas. Erfindungsgemäß verwendete Glashohlkugeln sind dadurch gekennzeichnet, dass die Alkalinität der unbeschichteten Glashohlkugeln, gemessen nach ASTM D3100, kleiner als 1,0 meq/g, bevorzugt kleiner 0,8 meq/g und besonders bevorzugt kleiner 0,6 meq/g ist. Durch Aufbringen geeigneter Beschichtungen kann die Alkalinität der eingesetzten Glashohlkugeln weiter verringert werden.

Vorzugsweise haben die Glashohlkugeln eine Teilchendichte von 0,2 g/cm3 - 0,8 g/cm3, bevorzugt 0,4 g/cm3 - 0,7 g/cm3, besonders bevorzugt 0,55 g/cm3 - 0,65 g/cm3 sowie eine mittleren Teilchengröße (d50) von 1 µm - 70 µm, bevorzugt 5 µm - 50 µm, weiter bevorzugt 5 µm - 30 µm und besonders bevorzugt 8 µm - 20 µm. Die mittlere Teilchengröße d50 ist der Durchmesser (mittlerer Volumendurchmesser), oberhalb und unterhalb dessen jeweils 50 Gew.-% der Teilchen liegen.

Insbesondere sind solche Glashohlkugeln bevorzugt, die eine hohe isostatische Druckfestigkeit aufweisen. Im Rahmen der vorliegenden Erfindung werden Glashohlkugeln mit einer isostatischen Druckfestigkeit von 500 bar - 2500 bar, bevorzugt von 1000 bar - 2200 bar sowie besonders bevorzugt von 1900 bar - 2100 bar verwendet.

Bei der angegebenen Druckfestigkeit handelt es sich um die Festigkeit gegenüber einem isostatischen Druck, bei dem mindestens 80% der Kugeln unbeschädigt bleiben, wenn sie dem genannten Druck in einer Flüssigkeitssäule ausgesetzt werden.

Die erfindungsgemäßen Glahohlkugeln können oberflächenbehandelt, z.B. silanisiert sein, um eine bessere Verträglichkeit mit dem Polymer zu gewährleisten.

Glashohlkugeln sind kommerziell erhältlich und werden unter anderem von der Firma 3M Deutschland GmbH beispielsweise unter den Produktnummern iM30K oder S60HS sowie von Potters Industries Inc., Malvern, PA (USA) unter dem Namen 110P8 vertrieben. Solche kommerziellen Produkte können in unbeschichteter (unbehandelter) sowie beschichteter (oberflächenbehandelt) Form erhalten werden. Im Rahmen der vorliegenden Erfindung ist die Verwendung beschichteter Produkte bevorzugt.

In einer bevorzugten Ausführungsform enthält die Coextrusionsschicht neben den erfindungsgemäßen Glashohlkugeln keinerlei weiteren Füll- oder Verstärkungsstoffe aus Glas wie zum Beispiel Glasfasern.

Das Polycarbonat der Basisschicht kann ebenfalls Füll- und Verstärkungsstoffe wie glashaltige Füllstoffe (zum Beispiel Glasfasern, Glaskugeln oder Glashohlkugeln) oder Talk enthalten, insbesondere wenn füllstoffhaltiges recyceltes Polycarbonat als Material für die Basisschicht eingesetzt wird. Der Füllstoffgehalt der Basisschicht soll jedoch maximal 20% des Füllstoffgehaltes der Coextrusionsschicht betragen. Die Basisschicht kann 0,0 bis 2,0 Gew.-%, bevorzugt 0,0 Gew.-% bis 1,5 Gew.-%, besonders bevorzugt 0,0 Gew.-% unbehandelte oder oberflächenbehandelte Füll- und Verstärkungsstoffe enthalten. Bevorzugt ist die Basisschicht jedoch frei von Füll- und Verstärkungsstoffen.

Die Polymerzusammensetzung bzw. die Coextrusionsschicht kann als weitere Additive enthalten:
a) 0,000 Gew.-% bis 0,050 Gew.-% einer einprotonigen oder mehrprotonigen Säure, wobei Phosphorsäure und Phosphorige Säure, insbesondere 85%ige wässrige ortho-Phosphorsäure besonders bevorzugt ist. Falls dieses Additiv enthalten ist, sind bevorzugte Mengen 0,001 Gew.-% bis 0,010 Gew.-%, besonders bevorzugt 0,003 Gew.-% bis 0,006 Gew.-%, und
b) 0,0 Gew% bis 10,0 Gew.-%, bevorzugt von 0,0 Gew% bis 8,0 Gew.-%, besonders bevorzugt von 0,1 Gew.% bis 7,0 Gew.-%, mindestens ein oder mehrere UV-Absorber, wobei die Gew.-% Angabe der Gesamtmenge aller UV-Absorber entspricht.

Der thermoplastische Kunststoff für die Basisschicht ist Polycarbonat, das einen MVR von 3 bis 9 cm3/10 min aufweist. Der transparente thermoplastische Kunststoff ist in der Zusammensetzung in einer Menge enthalten, dass dieser mit den übrigen Komponenten wie Additiven 100 Gew.-% ergibt.

Die Polymerzusammensetzung der Basisschicht kann 0,00 Gew.-% bis 0,50 Gew.-%, bevorzugt 0,05 Gew.-% bis 0,4 Gew.-%, besonders bevorzugt 0,1 Gew.-% bis 0,35 Gew.-% mindestens ein oder mehrere UV-Absorber enthalten, wobei die Gew.-% Angabe der Gesamtmenge aller UV-Absorber entspricht.

Als weitere Additive für die Polymerzusammensetzung der Coextrusionsschicht und der Basisschicht sind die folgenden Additive geeignet:
c) 0,00 Gew.-% bis 0,20 Gew.-%, bevorzugt 0,01 Gew.-% bis 0,10 Gew.-%, ein oder mehrere Thermo- bzw. Verarbeitungsstabilisator, bezogen auf die Gesamtmenge an Thermo- bzw. Verarbeitungsstabilisatoren, bevorzugt ausgewählt aus der Gruppe der Phosphine, Phosphite und phenolischen Antioxidantien sowie deren Mischungen, wobei die Gew.-% Angabe der Gesamtmenge aller Thermo- bzw. Verarbeitungsstabilisatoren entspricht,
d) 0,00000 Gew.-% bis 5,00000 Gew.-%, bevorzugt 0,00001 Gew.-% bis 1,00000 Gew.-% ein oder mehrere weitere Additiv, bezogen auf die Gesamtmenge an Additiven.

Die Polymerzusammensetzung kann weiterhin auch Entformungsmittel enthalten. Dieses wird üblicherweise in einer Menge von 0,00 Gew.-% bis 1,00 Gew.-%, bevorzugt 0,01 Gew.-% bis 0,50 Gew.-%, besonders bevorzugt 0,01 Gew.-% bis 0,40 Gew.-% eingesetzt. Bevorzugt enthält die Polymerzusammensetzung der Coextrusionsschicht bzw. Coextrusionsschicht und Basisschicht kein Entformungsmittel.

Die Mengenangaben der einzelnen Additive beziehen sich jeweils auf die gesamte Polymerzusammensetzung sowohl der Coextrusionsschicht als auch der Basisschicht. Die Additive können jeweils alleine oder in Kombination von zwei oder mehreren eingesetzt werden.

Polycarbonate im Sinn der vorliegenden Erfindung sind sowohl Homopolycarbonate, Copolycarbonate als auch Polyestercarbonate. Besonders bevorzugte Polycarbonate im Rahmen der vorliegenden Erfindung sind Homopolycarbonate auf Basis von Bisphenol A und Copolycarbonate auf Basis der beiden Monomere Bisphenol A und 1,1-Bis-(4-hydroxyphenyl)- 3,3,5-trimethylcyclohexan, bevorzugt in einem Gewichtsverhältnis von 9:1 bis 3:7. Die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha-alpha'-Bis-(hydroxyphenyl)-diisopropylbenzole,Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole, welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Wird das Polycarbonat als thermoplastischer Kunststoff in der Coextrusionsschicht A) eingesetzt, so besitzt es ein Gewichtsmittelmolekulargewicht Mw von 24.000 bis 33.000, bevorzugt von 25.000 bis 32.000, weiter bevorzugt von 25.000 bis 30.000, besonders bevorzugt von 25.000 bis 27.000 g/mol, wobei die jeweiligen Grenzwerte jeweils eingeschlossen sind. Die Schmelzevolumenrate MVR (gemessen in Anlehnung an DIN EN ISO 1133 bei 1,2 kg Beladung und 300°C) beträgt 8 cm³/10 min bis 16 cm3/10 min.

Wird das Polycarbonat als thermoplastischer Kunststoff in der Basisschicht eingesetzt, so besitzt es ein Gewichtsmittelmolekulargewicht Mw von 26.000 bis 35.000, bevorzugt von 28.000 bis 33.000, besonders bevorzugt 29.000 bis 32.000, wobei die jeweiligen Grenzwerte jeweils eingeschlossen sind. Die Schmelzevolumenrate MVR (gemessen in Anlehnung an DIN EN ISO 1133 bei 1,2 kg Beladung und 300°C) beträgt 3 cm3/10 min bis 9 cm3/10 min.

Die Gewichtsmittelmolekulargewichte Mw sind jeweils ermittelt durch Gelpermeationschromatographie und Eichung mit Polycarbonatstandard.

In einer speziellen Ausführungsform der vorliegenden Erfindung wird als thermoplastischer Kunststoff sowohl für die Polymerzusammensetzung der Basisschicht als auch für die Polymerzusammensetzung der Coextrusionsschicht ausschließlich jeweils ein Homopolycarbonat auf Basis von 2,2-Bis-(4-hydroxyphenyl)-propan eingesetzt. Bevorzugt sind diese Homopolycarbonate linear, d. h. sie enthalten keinerlei Verzweiger.

Unter einprotonigen oder mehrprotonigen Säuren im Sinne der vorliegenden Erfindung sind beispielsweise Vinylphosphorsäure, Zitronensäure, Phosphorige Säure und Phosphorsäure, gemeint. 85%ige wässrige ortho-Phosphorsäure ist besonders bevorzugt.

Entformer bzw. Entformungsmittel im Rahmen der vorliegenden Erfindung sind Verbindungen
- auf Basis von % Pentaerythrittetrastearat (PETS), im Handel erhältlich beispielsweise als Loxiol® VPG 861 der Firma Emery Oleochemicals Europe, Düsseldorf, Deutschland;
- auf Basis von Glycerinmonostearat, kommerziell erhältlich zum Beispiel als Loxiol® EP 129 von der Firma Emery Oleochemicals Europe, Düsseldorf, Deutschland oder Dimodan HAB der Firma Danisco, Kopenhagen, Dänemark;
- auf Basis von 2-Octyldodecylstearat, kommerziell erhältlich zum Beispiel als Loxiol® 3820 von der Firma Emery Oleochemicals Europe, Düsseldorf, Deutschland;
- auf Basis eines verzweigten Estergemisches (CAS 573991-39-6), kommerziell erhältlich als Lubril® JK von der Firma Rhodia GmbH, Frankfurt, Deutschland
- auf Basis von Esterwachsen, kommerziell erhältlich zum Beispiel als Loxiol® G 32 von der Firma Emery Oleochemicals Europe, Düsseldorf, Deutschland

Die genannten Entformungsmittel können alleine oder in Mischungen eingesetzt werden. Im Rahmen der vorliegenden Erfindung ist die Verwendung von Entformungsmitteln auf der Basis von Pentaerythrittetrastearat sowie auf Basis von 2-Octyldodecylstearat, alleine oder in Mischung, bevorzugt.

UV-Absorber, die im Rahmen der Erfindung sowohl in der Basis- als auch in der Coestrusionsschicht eingesetzt werden können, sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Beispiele für solche UV-Absorber sind Benzotriazole, Triazine, Benzophenone und/oder arylierte Cyanoacrylate.

UV-Absorber vom Typ der Benzotriazole sind beispielsweise und bevorzugt 2-(3',5'-Bis-(1,1-dimethylbenzyl)-2'-hydroxy-phenyl)-benzotriazol (Tinuvin® 234, BASF SE, Ludwigshafen), 2-(2'-Hydroxy-5'-(tert.-octyl)-phenyl)-benzotriazol (Tinuvin® 329, BASF SE, Ludwigshafen), 2-(2'-Hydroxy-3'-(2-butyl)-5'-(tert.butyl)-phenyl)-benzotriazol (Tinuvin® 350, BASF SE, Ludwigshafen) sowie Bis-(3-(2H-benztriazolyl)-2-hydroxy-5-tert.-octyl)methan, (Tinuvin® 360, BASF SE, Ludwigshafen).

UV-Absorber vom Triazin-Typ sind zum Beispiel und bevorzugt (2-(4,6-diphenyl-1,3,5-triazin-2-yl)-5-(hexyloxy)-phenol (Tinuvin® 1577, BASF SE, Ludwigshafen), sowie 2-[2-hydroxy-4-(2-ethylhexyl)oxy]phenyl-4,6-di(4-phenyl)phenyl-1,3,5-triazine (CGX UVA 006 oder auch Tinuvin® 1600, BASF SE, Ludwigshafen).

UV-Absorber vom Typ der Benzophenone sind beispielsweise und bevorzugt 2,4-Dihydroxybenzophenon (Chimasorb® 22 , BASF SE, Ludwigshafen) und 2-Hydroxy-4-(octyloxy)-benzophenon (Chimasorb® 81, BASF SE, Ludwigshafen).

Des weiteren können UV-Absober aus den Klassen der Cyanacrylate sowie der Malonate wie zum Beispiel und bevorzugt 1,3-bis-[(2'-cyano-3',3'-diphenylacryloyl)oxy]-2,2-bis-{[(2'-cyano-3',3'-diphenylacryloyl)oxy]methyl}-propan (Uvinul® 3030, BASF SE Ludwigshafen), oder Tetraethyl-2,2'-(1,4-phenylene-dimethylidene)-bismalonate (Hostavin® B-Cap, Clariant AG) eingesetzt werden.

In einer speziellen Ausführungsform der vorliegenden Erfindung enthält die Polymerzusammensetzung der Coextrusionsschicht einen oder mehrere UV-Absorber, wobei kein UV-Absorber aus der Gruppe der Benzotriazole enthalten ist.

Bevorzugte UV-Absorber für die Coextrusionsschicht sind 2-[2-hydroxy-4-(2-ethylhexyl)oxy]phenyl-4,6-di(4-phenyl)phenyl-1,3,5-triazine (CGX UVA 006 oder Tinuvin® 1600, BASF SE, Ludwigshafen)oder (2-(4,6-diphenyl-1,3,5-triazin-2-yl)-5-(hexyloxy)-phenol (Tinuvin® 1577, BASF SE, Ludwigshafen).

In einer weiteren speziellen Ausführungsform der vorliegenden Erfindung ist die Coextrusionsschicht frei von jeglichen UV-Absorbern.

Als Thermo- bzw. Verarbeitungsstabilisatoren sind im Sinne der vorliegenden Erfindung Phosphite und Phosphonite sowie Phosphine besonders geeignet.

Beispiele sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-ditert-utylphenyl)pentaerythritoldiphosphit, Bis(2,4-di-cumylphenyl)pentaerythritoldiphosphit, Bis(2,6-di-tert-butyl-4-ethylphenyl)pentaerythritoldiphosphit, Diisodecyloxypentaerythritoldiphosphit, Bis(2,4-di-tert-butyl-6-methylphenyl)-pentaerythritoldiphosphit, Bis(2,4,6-tris(tertbutylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl(3,3',5,5'-tetra-tert-butyl-1,1'-biphenyl-2,2'-diyl)phosphit, 5-Butyl-5-ethyl-2-(2,4,6-tritert-butylphenoxy)-1,3,2-dioxaphosphiran,Bis(2,6-di-ter-butyl-4-ethylphenyl)pentaerythritoldiphosphit, Triphenylphosphin (TPP), Trialkylphenylphosphin, Bisdiphenylphosphino-ethan oder ein Trinaphthylphosphin.

Insbesondere bevorzugt werden Triphenylphosphin (TPP), Irgafos® 168 (Tris(2,4-di-tert-butylphenyl)-phosphit) und Tris(nonylphenyl)phosphit oder deren Mischungen eingesetzt.

Ferner können phenolische Antioxidantien wie alkylierte Monophenole, alkylierteThioalkylphenole, Hydrochinone und alkylierte Hydrochinone eingesetzt werden. Besonders bevorzugt werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt.

Weitere Additive im Rahmen der vorliegenden Erfindung sind beispielsweise Antistatika, anorganische Pigmente, organische Farbstoffe, Flammschutzmittel, IR-Absorber oder optische Aufheller. Die anorganischen Pigmente und / oder organischen Farbstoffe können dabei sowohl bei der Compoundierung als auch bevorzugt bei der Extrusion der Platte hinzugegeben werden. Bei der Extrusion erfolgt die Zugabe bevorzugt über ein Farbmasterbatch, welcher eine hohe Konzentration der genannten Additive in einer Polycarbonatträgermatrix enthält. Die anorganischen Pigmente und / oder organischen Farbstoffe können sowohl in der Basis- als auch in der Coextrusionsschicht Anwendung finden.

Es hat sich gezeigt, dass es zur Lösung der erfindungsgemäßen Aufgabe von Bedeutung ist, bestimmte Schichtdicken in den erfindungsgemäßen coextrudierten Platten einzuhalten. Insbesondere die Dicke der Glashohlkugel-haltigen Coextrusionsschicht muss in einem eng definierten Bereich bleiben, damit neben einer hohen Kratzfestigkeit, einer ansprechenden Haptik vor allem ein ausgezeichneter homogener äußerer optischer Eindruck erzielt werden kann.

Im Rahmen der vorliegenden Erfindung sind Schichtdicken der Coextrusionsschicht von 50 µm bis 300 µm, bevorzugt 90 µm bis 250 µm, weiter bevorzugt 100 µm bis 200 µm, besonders bevorzugt 120 µm bis 170 µm. Als Dicke der Coextrusionsschicht wird hierbei der Mittelwert zweier Messungen, einmal in der Mitte der Platte sowie einmal in einem Abstand von 10 cm vom Rand bezogen auf die Plattenbreite, definiert. Die Bestimmung der Schichtdicke der Coextrusionsschicht erfolgte mit Hilfe der Lichtmikroskopie. Die Dicke der Gesamtplatte inklusive Basis- und Coextrusionsschicht beträgt im Rahmen der vorliegenden Erfindung 1 mm bis 8 mm, bevorzugt, 1 mm bis 5 mm, besonders bevorzugt 2 mm bis 4 mm.

Die Herstellung der Formmassen für die Coextrusionsschicht erfolgt nach an sich bekannten Compoundierverfahren, bevorzugt unter Verwendung von Zweiwellenextrudern. Hierbei hat es sich jedoch als vorteilhaft erwiesen, bestimmte Verfahrensparameter einzustellen. Hierzu zählt eine Dosierung der Glashohlkugeln über einen Seiteneinlauf direkt in die Schmelze bei einer optimierten Gestaltung von Massetemperatur und Extruderdrehzahl. Die Massetemperatur beträgt 320°C bis 360°C, bevorzugt von 330 °C bis 360 °C, besonders bevorzugt 330 bis 355 °C. Die Extruderdrehzahl beträgt 300 U/min bis 500 U/min, bevorzugt 360 bis 500 U/min.

Die Herstellung der coextrudierten Platten erfolgt durch übliche Coextrusionsverfahren, beispielsweise unter Verwendung von Coextrusionsadaptern oder Coextrusionsdüsen. Bevorzugt ist die Coextrusionsdüse.

### Beispiele:

Zur Herstellung von coextrudierten Platten wurden im Rahmen der vorliegenden Erfindung unterschiedliche Polymerzusammensetzungen für die Coextrusionsschicht durch Compoundierung hergestellt.

Die Einrichtung zur Compoundierung besteht aus:
- Vier gravimetrischen Dosierwaagen der Fa. K-Tron
- einem gleichlaufenden Zweiwellenextruder Evolum 32HT der Firma Clextral mit einem Schneckendurchmesser von 32 mm
- einer Lochdüse zur Ausformung von Schmelzesträngen
- einem Wasserbad zur Abkühlung und dem Verfestigen der Stränge
- einem Granulator
- Optionaler Seitenextruder an Gehäuse 5 (Seiteneinlauf)
- Extruder mit 11 Gehäusen a 4D Länge
- Vakuumentgasung mittels Wasserringpumpe an Gehäuse 10.

Der Durchsatz lag bei 50 kg / h.

Die hergestellten Polymerzusammensetzungen der Coextrusionsschicht sowie ausgewählte Compoundierbedingungen sind nachfolgend näher beschrieben.

Hierbei wurde die verwendete 85%ige ortho-Phosphorsäure (Analysequalität EMSURE® ACS, ISO, Reag. Ph Eur) in allen Fällen mit Polycarbonatpulver vermischt über den Einlauf (an Gehäuse 1) zugegeben.

Das Polycarbonat-Granulat wurde ebenfalls über den Einlauf an Gehäuse 1 dosiert.

Die Dosierung der Glashohlkugeln erfolgte entweder über den Seiteneinlauf an Gehäuse 5 oder über den Einlauf an Gehäuse 1. Bei Dosierung über den Seiteneinlauf (auch Seitenextruder genannt) erfolgte die Zugabe "drucklos".

Glashohlkugeln, die in den Beispielen eingesetzt wurden, sind wie folgt charakterisiert: 3M Experimental Glass Bubbles, amorphous silica treated auf Basis von iM30K der Firma 3M Deutschland GmbH, Neuss, Deutschland, mit einer Alkalinität von ≤ 0,5 meq/g sowie einer mittleren Teilchengröße d50 von 17 µm (Volumendurchmesser). Die isostatische Druckfestigkeit beträgt 2000 bar.

UV Absorber CGX UVA 006 der BASF SE, Ludwigshafen, ist-[2-hydroxy-4-(2-ethylhexyl)oxy]phenyl-4,6-di(4-phenyl)phenyl-1,3,5-triazine.

TPP ist Triphenylphosphin.

Uvitex OB ist 2,5-thiophendiylbis(5-tert-butyl-1,3-benzoxazol), ein optischer Aufheller von BASF SE, Ludwigshafen.

### Polymerzusammensetzung der Coextrusionsschicht A:

85,000% Makrolon® 3100 000000, ein thermostabilisiertes lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 10,000% Glashohlkugeln und eine Vormischung aus 4,940% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,030% CGX UVA 006, 0,025% TPP und 0,0050% Phosphorsäure werden compoundiert.

### Compoundierbedingungen A:

Drehzahl: 450 U / min, Schmelzetemperatur 370°C.

Die Gehäusetemperaturen betrugen in Zone 1 80 °C, in der Zone 2 220 - 223 °C und in den folgenden Zonen jeweils zwischen 310 und 349 °C.

Die Glashohlkugeln wurden über den Seiteneinlauf an Gehäuse 5 zugegeben.

### Polymerzusammensetzung der Coextrusionsschicht B:

85,000% Makrolon® 2600 000000, ein thermostabilisiertes lineares Polycarbonat der Bayer MaterialScience AG, Leverkusen, auf Basis von Bisphenol-A mit einer Schmelzevolumenrate MVR von 12,5 cm3/10 min (gemessen in Anlehnung an DIN EN ISO 1133 bei 1,2 kg Beladung und 300°C), 10,0000% Glashohlkugeln und eine Vormischung aus 4,940% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,030% CGX UVA 006, 0,025% TPP und 0,0050% Phosphorsäure werden compoundiert.

### Compoundierbedingungen B:

Drehzahl: 450 U / min, Schmelzetemperatur 345°C.

Die Gehäusetemperaturen betrugen in Zone 1 78 - 80 °C, in der Zone 2 200 - 205 °C und in den folgenden Zonen jeweils zwischen 270 und 327 °C.

Die Glashohlkugeln wurden über den Seiteneinlauf an Gehäuse 5 gegeben.

### Polymerzusammensetzung der Coextrusionsschicht C:

85,000% Makrolon® 2600 000000, ein thermostabilisiertes lineares Polycarbonat der Bayer MaterialScience AG, Leverkusen, auf Basis von Bisphenol-A mit einer Schmelzevolumenrate MVR von 12,5 cm3/10 min (gemessen in Anlehnung an DIN EN ISO 1133 bei 1,2 kg Beladung und 300°C), 10,0000% Glashohlkugeln und eine Vormischung aus 4,970% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,025% TPP und 0,0050% Phosphorsäure werden compoundiert.

### Compoundierbedingungen C:

Drehzahl: 450 U / min, Schmelzetemperatur 339°C.

Die Gehäusetemperaturen betrugen in Zone 1 79 - 80 °C, in der Zone 2 200 - 218 °C und in den folgenden Zonen jeweils zwischen 270 und 318 °C.

Die Glashohlkugeln wurden über den Seiteneinlauf an Gehäuse 5 zugegeben.

### Polymerzusammensetzung der Coextrusionsschicht D:

85,000% Makrolon® 2600 000000, ein thermostabilisiertes lineares Polycarbonat der Bayer MaterialScience AG, Leverkusen, auf Basis von Bisphenol-A mit einer Schmelzevolumenrate MVR von 12,5 cm3/10 min (gemessen in Anlehnung an DIN EN ISO 1133 bei 1,2 kg Beladung und 300°C), 10,0000% Glashohlkugeln und eine Vormischung aus 4,970% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,025% TPP und 0,0050% Phosphorsäure werden compoundiert.

### Compoundierbedingungen D:

Extruderdrehzahl: 325 U / min, Schmelzetemperatur 342°C.

Die Gehäusetemperaturen betrugen in Zone 1 78 - 80 °C, in der Zone 2 200 - 216 °C und in den folgenden Zonen jeweils zwischen 308 und 326 °C.

Die Glashohlkugeln wurden über den Einlauf an Gehäuse 1 zugegeben.

### Polymerzusammensetzung der Coextrusionsschicht E:

85,000% Makrolon® 3100 000000, ein thermostabilisiertes lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 10,000% Glashohlkugeln und eine Vormischung aus 4,950% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,025% TPP, 0,02 Gew.-% Uvitex® OB und 0,0050% Phosphorsäure werden compoundiert.

### Compoundierbedingungen E:

Drehzahl: 225 U / min, Schmelzetemperatur 335°C.

Die Gehäusetemperaturen betrugen in Zone 1 80 °C, in der Zone 2 198 °C und in den folgenden Zonen jeweils zwischen 298 und 321 °C.

Die Glashohlkugeln wurden über den Seiteneinlauf an Gehäuse 5 zugegeben.

### Polymerzusammensetzung der Coextrusionsschicht F:

85,000% Makrolon® 3100 000000, ein thermostabilisiertes lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 10,000% Glashohlkugeln und eine Vormischung aus 4,750% Makrolon® 3108-Pulver, ein lineares Polycarbonat der Bayer MaterialScience AG, Leverkusen, auf Basis von Bisphenol-A mit einer Schmelzevolumenrate MVR von 6 cm3/10 min (gemessen in Anlehnung an DIN EN ISO 1133 bei 1,2 kg Beladung und 300°C), 0,200 Gew.-% Tinuvin® 360, 0,025% TPP, 0,020 Gew.-% Uvitex® OB und 0,0050% Phosphorsäure werden compoundiert.

### Compoundierbedingungen F:

Drehzahl: 226 U / min, Schmelzetemperatur 336°C.

Die Gehäusetemperaturen betrugen in Zone 1 80 °C, in der Zone 2 201 °C und in den folgenden Zonen jeweils zwischen 298 und 318 °C.

Die Glashohlkugeln wurden über den Seiteneinlauf an Gehäuse 5 zugegeben.

Die Polymerzusammensetzungen der Coextrusionsschicht E und F wurden mit einer zu den Compundierung der Beispiele A-D vergleichbaren Extruderkonfiguration angefertigt.

Die unter Verwendung von E und F hergestellten Coex-Platten wiesen Agglomerate von Glashohlkugeln auf. Der Vergleich der MVR-Werte von E und F zeigt, dass 0,2 % Tinuvin® 360 sich negativ auf das Molekulargewicht (MVR Erhöhung) auswirkt.

Unter Verwendung der vorstehend beschriebenen Polymerzusammensetzungen für die Coextrusionsschicht wurden nachfolgend coextrudierte Polycarbonatplatten hergestellt. Hierbei wurde die nachfolgend beschriebene Verfahrensvariante angewendet.

### Coextrusionsverfahren (Düsenverfahren):

Es wurden Polycarbonat-Massivplatten mit Hilfe folgender Maschinen und Apparate hergestellt:
- einem Einschneckenextruder (Entgasungsextruder, Schneckendurchmesser 60 mm und einer Einschnecke der Länge 33 D, Einschnecke, Fa. Breyer, Singen / Deutschland)
   Der Extruder ist mit einer Vakuum-Schmelzeentgasung ausgerüstet.
- einer MAAG Schmelzepumpe
- einer 1-Schicht Massivplatten-Coexdüse (der Fa. Breyer, Singen / Deutschland) mit einer Breite von 400 mm für Masssivplatten von 1 bis 10 mm
- einem 3-Zonen Coextruder mit einem Durchmesser von 30mm und einer Länge von 25D
- einem horizontalen Dreiwalzenkalander, Breite 500 mm, Durchmesser 300 mm, Fa. Breyer, Singen/Germany
- einer Rollenbahn, Rollenbahnlänge (Abstand Kalander / Ablängung) 6 m
- einem Walzenabzug
- einer Quertrenneinrichtung (Kreissäge)
- einem Ablagetisch.

Die einseitig mit einer Coextrusionsschicht versehenen Massivplatten (Platten 1-7, s. Tabelle 1) wurden wie folgt hergestellt:
Das Polycarbonat-Granulat für die Basis (im Folgenden PC-1), lineares Polycarbonat auf Basis von Bisphenol-A mit einer Schmelzevolumenrate MVR von 6,0 cm3/10 min (bei 1,2 kg Beladung und 300°C gemessen in Anlehnung an DIN EN ISO 1133), enthaltend 0,1 Gew.-% Tinuvin® 360 als UV-Absorber sowie 0,05 Gew.-% Triphenylphosphin, wurde ungetrocknet jeweils dem Fülltrichter des Hauptextruders zugeführt und über die Zylinder/Schnecke aufgeschmolzen und gefördert. Die Temperaturen der einzelnen Gehäuse des Hauptextruders lagen bei 280° bis 290°C, die resultierende Massetemperatur bei 300 °C. Die Schmelzepumpendrehzahl wurde auf 42 U/min eingestellt, die resultierende Wellendrehzahl lag zwischen 54 und 56 U/min. Als Material für die einseitige Coextrusionsschicht wurde jeweils die Polymerzusammensetzungen für die Coextrusionsschicht A-F verwendet, welche jeweils vorgetrocknet (4 h bei 120°C im Trockenlufttrockner) dem Fülltrichter des Coextruders zugeführt wurde. Die Gehäusetemperaturen des Coextruders lagen bei 180 bis 240 °C, die Massetemperatur bei ca. 240 °C. Die Wellendrehzahl betrug 45 U / min.

Beide Materialschmelzen wurden in der Coextrusionsdüse zusammengeführt und anschließend in eine Breitschlitzdüse gefördert, die mit einem Lippenspalt von 2,8 mm eingestellt war. Die Abzugsgeschwindigkeit betrug 1,22 m/min. Die Walzentemperaturen des Kalanders betrugen für die Walzen 1, 2 und 3 115°, 125°und 135°C, der Walzenspalt wurde so eingestellt, dass eine 2,0 mm dicke Platte resultiert.

Die weiteren Einrichtungen der Anlagen dienten zum Transport, Ablängen und Ablegen der Platten.

Die so hergestellten Platten wiesen eine Gesamtdicke von 2,0 mm und eine Plattenbreite von 400 mm auf. Die Deckschicht (aus der Coextrusion) enthält Zusammensetzungen A-F in einer mittleren Dicke von 100 µm beziehungsweise 150 µm (s. Tabelle 1).

### Bestimmung der Schichtdicke der Coextrusionsschicht:

Die Messung der Schichtdicke der Coextrusionsschicht erfolgt mittels Lichtmikroskopie mit einem Axioplan Mikroskop der Firma Zeiss mit skaliertem Okular und Objektiven mit jeweils 50facher und 200facher Vergrößerung unter Verwendung einer HBO 50 W Quecksilberdampflampe der Firma Philips.

Für die Messung wird zunächst aus der zu untersuchenden Platte an den ausgewählten Stellen ein Probenstück mit einer Länge von 1 cm und einer Breite von 0,5 cm ausgesägt. An diesem Probenstück wird dann entlang dem Plattenquerschnitt mit einem Mikrotom HM 355 S der Firma Thermo Fisher Scientific ein Dünnschnitt mit einer Dicke von 20 µm angefertigt. Die Schichtdicke der Coestrusionsschicht wird anschließend visuell durch Lichtmikroskopie unter Verwendung des oben beschriebenen Geräts als Differenz der Positionen der Grenzfläche Basisschicht-Coextrusionsschicht und der Grenzfläche Coextrusionsschicht-Luft in µm bestimmt.

**Tabelle 1: Zusammensetzung und Eigenschaften der hergestellten coextrudierten Platten:**

| Aufbau der Coextrudierten Platte | Platte 1 Vgl. | Platte 2 Erf.. | Platte 3 Erf. | Platte 4 Erf. | Platte 5 Vgl. | Platte 6 Vgl. | Platte 7 Vgl. |
|---|---|---|---|---|---|---|---|
| Polymerzusammensetzung der Coextrusionsschicht | A | B | C | C | D | E | F |
| MVR des bei der Compoundierung der Polymerzusammensetzung für die Coextrusionsschicht hauptsächlich eingesetzten Polycarbonat-Granulates | 6 | 12,5 | 12,5 | 12,5 | 12,5 | 6 | 6 |
| MVR Polymerzusammensetzung der Coextrusionsschicht nach Compoundierung (vor der Coextrusion) | 10,0 | 15,5 | 15,7 | 15,7 | 29,0 | 5,4 | 8,9 |
| UV-Absorber Polymerzusammensetzung der Coextrusionsschicht | CGX UVA 006 | CGX UVA 006 | Kein UV-Absorber | Kein UV-Absorber | Kein UV-Absorber | Kein UV-Absorber | Tinuvin® 360 |
| Dosierstelle Glashohlkugeln bei der Compoundierung der Polymerzusammensetzung für die Coextrusionsschicht | Seiteneinlauf | Seiteneinlauf | Seiteneinlauf | Seiteneinlauf | Einlauf | Seiteneinlauf | Seiteneinlauf |
| Extruderdrehzahl bei der Compoundierung der Polymerzusammensetzung | 450 U/min | 450 U/min | 450 U/min | 450 U/min | 325 U/min | 225 U/min | 226 U/min |
| für die Coextrusionsschicht Schmelzetemperatur (°C) | 370 | 345 | 339 | 339 | 342 | 335 | 336 |
| Basisschicht | PC-1 | PC-1 | PC-1 | PC-1 | PC-1 | PC-1 | PC-1 |
| Coextrusionsverfahrensvaria nte | Düsenverfahren | Düsenverfahren | Düsenverfahren | Düsenverfahren | Düsenverfahren | Düsenverfahren | Düsenverfahren |
| Gesamtdicke der Platte | | | | | | | |
| Mittlere Schichtdicke Coextrusionsschicht | 150 µm | 150 µm | 150 µm | 100 µm | 100 µm | 100 µm | 100 µm |
| Optischer Eindruck | o | + | ++ | ++ | -- | -- | -- |
| (Homogenität der Oberfläche) | | | | | (faserige Oberfläche) | (sichtbare Agglomerate von Glaskugeln) | (sichtbare Agglomerate von Glaskugeln) |

| | | | | | | | |
|---|---|---|---|---|---|---|---|
| Legende: o= Mittel; + = gut; ++ = sehr gut; -- = schlecht | | | | | | | |

Aus der Tabelle ist ersichtlich, dass die erfindungsgemäßen Polymerzusammensetzungen B), C) und D) eine gute Homogenität der Oberfläche aufweisen, während die Vergleichs-Polymerzusammensetzungen A), E) und F) lediglich eine mittlere bis schlechte Homogenität mit zum Teil deutlich sichtbaren Agglomeraten von Glashohlkugeln aufweisen.

Weiterhin zeigt Tabelle 1, dass Platten, die als Schicht A) die erfindungsgemäße Polymerzusammensetzung aufweisen, eine gute Homogenität der Oberfläche besitzen (Platte 2, 3, 4).

Aus Tabelle 1 geht eindeutig hervor, dass bei Verwendung eines Seiteneinlaufs des Extruders statt des normalen Einlaufs, einer erhöhten Drehzahl sowie bei definierten Massetemperaturen (als Synonym wird auch der Ausdruck Schmelzetemperatur verwendet) bei der Compoundierung und der erfindungsgemäßen Polymerzusammensetzung, die für Schicht A) verwendet wird, die Homogenität der Plattenoberfläche deutlich verbessert wird, im Vergleich zu Compoundierung über den normalen Einlauf (und 5) bzw. bei Seiteneinlauf jedoch bei niedrigeren Drehzahlen (Platten 6 und 7) bzw. bei Seiteneinlauf und erhöhter Drehzahl, jedoch bei höheren Massetemperaturen (Platte 1). Das Einhalten bestimmter Verfahrensparameter führen bei der Compoundierung der Polymerzusammensetzung ebenfalls zu einer verbesserten Homogenität bei.

Bestimmung der Kratzfestigkeit mittels Bleistift-Härteprüfer nach ISO 15184 bzw. ASTM D3363: Aus den jeweiligen Platten oder thermogeformten Werkstücken wurde durch Sägen Prüfkörper präpariert und auf einer Glasplatte fixiert. Die Bleistifthärte wurde unter Verwendung des Bleistift-Härteprüfers nach Wolf-Wilburn der Firma BYK-Gardner und Bleistiften der Firma Cretacolor ermittelt. Hierbei wurde in Anlehnung an ISO 15184 die Bezeichnung des Bleistifts angegeben, der in der Prüfanordnung bei einem Druck von 750 g unter einem 45° Winkel gerade keine Oberflächenverletzung mehr verursacht.

Der Wert für die Platten 3 und 4 lag bei 2B, jeweils gemessen in der Mitte der Platte.

Die wie oben beschrieben hergestellten erfindungsgemäßen coextrudierten Platten eignen sich zur Herstellung von Halbzeugen mittels Thermoformen:
Zum Thermoformen, der nach dem üblichen Stand der Technik durchgeführt wird, wurde die Platte 3 der Größe 1,9 x 400 x 500 mm, die aus den extrudierten Platten zurechtgesägt wurden, auf einer Illig-Thermoformanlage (U60 SB53C) thermogeformt.

Die Platte wurde zunächst bei 125°C für 4 Stunden getrocknet.

Die warme, vorgetrocknete Platte wurde in den Spannrahmen der Thermoformanlage mit der Coex-Seite nach oben eingelegt, verspannt und mittles IR-Strahler (eingestellt auf 500 °C) von der Oberseite her auf die Sollumformtemperatur von 210 °C gebracht und dann thermogeformt. Die Vorwärmzeit betrug dabei 92 sec.

Das verwendete Umformwerkzeug ist eine rechteckige Stufenpyramide mit 6 regelmäßigen Stufen und einer Gesamthöhe von 15 cm, die für den Prozess auf 80°C temperiert ist. Die Werkzeugabmessungen betragen 16 x 23 cm.

Der Thermoformprozess mit der Platte 3 verlief problemlos. Es liegt auch nach dem Thermoformen noch eine gleichmäßige Oberfläche von guter Qualität vor.

### Kratztest an thermogeformten Produkt

Die Kratzfestigkeit am thermogeformten Produkt wurde an verschiedenen Stufen der Stufenpyramide getestet.
Basisplatte: mindestens 2B
Auf 1. Stufe: mindestens 2B
Plattenseite 2. Stufe: mindestens 2B
Auf 3. Stufe: mindestens 2B
Plattenseite 4. Stufe: mindestens 2B
Auf 5. Stufe: mindestens 2B

## Patentansprüche

1. Polymerzusammensetzung P) enthaltend
- ein Polycarbonat mit einem gewichtsmittleren Molekulargewicht Mw von 24.000 bis 33.000 g/mol, bestimmt mittels Gelpermeationschromatographie unter Verwendung von Polycarbonatstandard, und einer Schmelzvolumenrate, gemessen nach DIN EN ISO 1133 bei 1,2 kg Belastung und 300°C, von 8 bis 16 cm³/(10 min) und
- 5,0 Gew.-% bis 20,0 Gew.-% (bezogen auf die Gesamtmenge der Zusammensetzung) Glashohlkugeln mit einer Alkalinität, gemessen nach ASTM D3100, von kleiner 1,0 meq/g
sowie übliche Additive,
wobei die Polymerzusammensetzung keine weiteren thermoplastischen Polymere enthält.

2. Polymerzusammensetzung gemäß Anspruch 1, wobei die Additive ausgewählt sind aus mindestens einem aus der Gruppe der einprotonigen oder mehrprotonigen Säuren, Thermo- oder Verarbeitungsstabilisatoren, UV Absorber, phenolische Antioxidantien, Entformungsmittel, Antistatika, anorganischen Pigmente, organischen Farbstoffe, Flammschutzmittel, IR-Absorber und optischen Aufheller.

3. Polymerzusammensetzung gemäß Anspruch 1 oder 2, wobei die Glashohlkugeln in einer Menge von 8,0 Gew.-% bis 15,0 Gew.-% enthalten sind.

4. Polymerzusammensetzung gemäß einem der vorhergehenden Ansprüche, wobei die Glashohlkugeln eine Druckfestigkeit von 500 bar bis 2500 bar aufweisen.

5. Polymerzusammensetzung gemäß einem der vorhergehenden Ansprüche, enthaltend 0,000 Gew.-% bis 0,050 Gew.-% einer einprotonigen oder mehrprotonigen Säure.

6. Verwendung der Polymerzusammensetzung gemäß einem der Ansprüche 1 bis 5 zur Herstellung von extrudierten Platten.

7. Platte, enthaltend zwei Schichten A) und B), wobei Schicht A) eine Polymerzusammensetzung gemäß Anspruch 1 und Schicht B) Polycarbonat mit einer Schmelzvolumenrate (MVR), gemessen nach DIN EN ISO 1133 bei 1,2 kg Belastung und 300°C, von 3 bis 9 cm³/(10 min) enthält, wobei das Polycarbonat in Schicht A) eine Schmelzvolumenrate (MVR) von 8 bis 16 cm³/(10 min) aufweist.

8. Platte gemäß Anspruch 7, wobei der thermoplastische Kunststoff in Schicht B) ein Polycarbonat oder Copolycarbonat mit einem mittleren Molekulargewicht (Gewichtsmittel) von 26.000 bis 33.000 g/mol ist.

9. Platte gemäß Anspruch 7 oder 8, wobei die Schichtdicke der Schicht A) 50 µm bis 300 µm und die Schichtdicke der Platte enthaltend Schicht A) und B) 1 mm bis 8 mm beträgt und die Platte mittels Coextrusion hergestellt wird.

10. Formkörper enthaltend eine Platte gemäß einem der Ansprüche 7 bis 9.

11. Behälter und Gepäckstücke, hergestellt aus einem Formkörper gemäß Anspruch 10.

12. Verfahren zur Herstellung der Polymerzusammensetzung P) gemäß Anspruch 1, wobei das Polycarbonat auf einem Zweiwellenextruder mit den Glashohlkugeln gemischt wird, **dadurch gekennzeichnet, dass** die Glashohlkugeln über einen Seiteneinlauf direkt in die Schmelze, die eine Massetemperatur von 320°C bis 360°C aufweist, dosiert werden und die Extruderdrehzahl 300 U/min bis 500 U/min beträgt und das Polycarbonat eine Schmelzvolumenrate (MVR), gemessen nach DIN EN ISO 1133 bei 1,2 kg Belastung und 300°C, von 8 bis 16 cm³/(10 min) aufweist.

## Claims

1. Polymer composition P) containing
- a polycarbonate with a weight-average molecular weight Mw of from 24,000 to 33,000 g/mol, determined by means of gel permeation chromatography using polycarbonate standard, and a melt volume rate, measured according to DIN EN ISO 1133 at 1.2kg load and 300°C, of from 8 to 16 cm3/10 min and
- 5.0 wt.% to 20.0 wt.% (based on the total amount of the composition) of glass hollow spheres with an alkalinity, measured according to ASTM D3100, of less than 1.0 meq/g
and conventional additives,
the polymer composition containing no further thermoplastic polymers.

2. Polymer composition according to claim 1, wherein the additives are chosen from at least one of the group of monoprotic or polyprotic acids, heat or processing stabilizers, UV absorbers, phenolic antioxidants, mould release agents, antistatics, inorganic pigments, organic dyestuffs, flameproofing agents, IR absorbers and optical brighteners.

3. Polymer composition according to claim 1 or 2, wherein it contains the glass hollow spheres in an amount of from 8.0 wt.% to 15.0 wt.%.

4. Polymer composition according to one of the preceding claims, wherein the glass hollow spheres have a compressive strength of from 500 bar to 2,500 bar.

5. Polymer composition according to one of the preceding claims, containing 0.000 wt.% to 0.050 wt.% of a monoprotic or polyprotic acid.

6. Use of the polymer composition according to one of claims 1 to 5 for the production of extruded sheets.

7. Sheet comprising two layers A) and B), wherein layer A) contains a polymer composition according to claim 1 and layer B) contains polycarbonate with a melt volume rate (MVR), measured according to DIN EN ISO 1133 at 1.2kg load and 300°C, of from 3 to 9 cm3/10 min, wherein the polycarbonate in layer A) has a melt volume rate (MVR) of from 8 to 16 cm3/10 min.

8. Sheet according to claim 7, wherein the thermoplastic in layer B) is a polycarbonate or copolycarbonate with an average molecular weight (weight-average) of from 26,000 to 33,000 g/mol.

9. Sheet according to claim 7 or 8, wherein the layer thickness of layer A) is 50 µm to 300 µm and the layer thickness of the sheet comprising layer A) and B) is 1 mm to 8 mm and the sheet is produced by means of coextrusion.

10. Shaped articles comprising a sheet according to one of claims 7 to 9.

11. Containers and pieces of luggage produced from a shaped article according to claim 10.

12. Process for the preparation of the polymer composition P) according to claim 1, wherein the polycarbonate is mixed with the glass hollow spheres on a twin-screw extruder, **characterized in that** the glass hollow spheres are introduced directly into the melt, which has a melt temperature of from 320°C to 360°C via a lateral intake, and the extruder speed is 300 rpm to 500 rpm and the polycarbonate has a melt volume rate (MVR), measured according to DIN EN ISO 1133 at 1.2kg load and 300°C, of from 8 to 16 cm3/10 min.

## Revendications

1. Composition polymère P), contenant :
- un polycarbonate ayant un poids moléculaire moyen en poids Mw de 24 000 à 33 000 g/mol, déterminé par chromatographie par perméation de gel en utilisant un étalon polycarbonate, et un indice de fluidité à chaud, mesuré selon DIN EN ISO 1133 avec une charge de 1,2 kg et à 300 °C, de 8 à 16 cm³/(10 minutes), et
- 5,0 % en poids à 20,0 % en poids (par rapport à la quantité totale de la composition) de billes de verre creuses ayant une alcalinité, mesurée selon ASTM D3100, inférieure à 1,0 méq./g,
ainsi que des additifs usuels,
la composition polymère ne contenant pas de polymères thermoplastiques supplémentaires.

2. Composition polymère selon la revendication 1, dans laquelle les additifs sont choisis parmi au moins un du groupe constitué par les acides monoprotiques ou polyprotiques, les stabilisateurs thermiques ou d'usinage, les absorbeurs UV, les antioxydants phénoliques, les agents de démoulage, les antistatiques, les pigments inorganiques, les colorants organiques, les agents ignifuges, les absorbeurs IR et les azurants optiques.

3. Composition polymère selon la revendication 1 ou 2, dans laquelle les billes de verre creuses sont contenues en une quantité de 8,0 % en poids à 15,0 % en poids.

4. Composition polymère selon l'une quelconque des revendications précédentes, dans laquelle les billes de verre creuses présentent une résistance à la compression de 500 bar à 2 500 bar.

5. Composition polymère selon l'une quelconque des revendications précédentes, contenant 0,000 % en poids à 0,050 % en poids d'un acide monoprotique ou polyprotique.

6. Utilisation de la composition polymère selon l'une quelconque des revendications 1 à 5 pour la fabrication de plaques extrudées.

7. Plaque, contenant deux couches A) et B), la couche A) contenant une composition polymère selon la revendication 1 et la couche B) contenant un polycarbonate ayant un indice de fluidité à chaud (MVR), mesuré selon DIN EN ISO 1133 avec une charge de 1,2 kg et à 300 °C, de 3 à 9 cm³/(10 minutes), le polycarbonate dans la couche A) présentant un indice de fluidité à chaud (MVR) de 8 à 16 cm³/(10 minutes).

8. Plaque selon la revendication 7, dans laquelle le plastique thermoplastique dans la couche B) est un polycarbonate ou un copolycarbonate ayant un poids moléculaire moyen (moyenne en poids) de 26 000 à 33 000 g/mol.

9. Plaque selon la revendication 7 ou 8, dans laquelle l'épaisseur de couche de la couche A) est de 50 µm à 300 µm et l'épaisseur de couche de la plaque contenant les couches A) et B) est de 1 mm à 8 mm, et la plaque est fabriquée par co-extrusion.

10. Corps moulé contenant une plaque selon l'une quelconque des revendications 7 à 9.

11. Contenants et bagages, fabriqués à partir d'un corps moulé selon la revendication 10.

12. Procédé de fabrication de la composition polymère P) selon la revendication 1, selon lequel le polycarbonate est mélangé avec les billes de verre creuses dans une extrudeuse à deux arbres, **caractérisé en ce que** les billes de verre creuses sont introduites par une entrée latérale directement dans la masse fondue, qui présente une température en masse de 320 °C à 360 °C, et la vitesse de rotation de l'extrudeuse est de 300 tours/minute à 500 tours/minute, et le polycarbonate présente un indice de fluidité à chaud (MVR), mesuré selon DIN EN ISO 1133 avec une charge de 1,2 kg et à 300 °C, de 8 à 16 cm³/(10 minutes).
